# EUROPÄISCHE PATENTANMELDUNG

(11) **EP 3 576 287 A1**
(43) Veröffentlichungstag der Anmeldung: **04.12.2019**
(21) Anmeldenummer: 19176336.6
(22) Anmeldetag: 24.05.2019
(51) Int. Cl.: H02P 8/24, H02P 8/38, H02P 8/36, D01H 1/20, B65H 54/74, B65H 63/00, D01H 3/26, D01H 4/42, D01H 13/14, D01H 13/32

(54) **VERFAHREN ZUM BETREIBEN EINER TEXTILMASCHINE SOWIE TEXTILMASCHINE**

(30) Priorität: 29.05.2018 DE 102018112802
(71) Anmelder: Maschinenfabrik Rieter AG, 8406 Winterthur (CH)
(72) Erfinder: Maleck, Mario, 85137 Walting (DE); Wein, Robin, 85077 Manching (DE)
(74) Vertreter: Baudler, Ron

(57) **Zusammenfassung**

Die vorliegende Erfindung betrifft ein Verfahren zum Betreiben einer Textilmaschine, insbesondere einer Offenend- oder Luftspinnmaschine, wobei die Textilmaschine eine Vielzahl an zumindest teilweise einzelmotorisch angetriebenen Arbeitsstellen (1) umfasst, wobei einer Arbeitsstelle (1) zumindest ein Schrittmotor (17) zugeordnet ist. Erfindungsgemäß wird vorgeschlagen, dass eine Lastgröße des Schrittmotors (17), insbesondere ein Lastwinkel, gemessen wird und eine Annäherung eines vom Schrittmotor (17) angetriebenen Elements (5; 7; 9; 11; 12; 14; 16) an eine Endlage (E) durch eine Veränderung der Lastgröße, insbesondere ein Ansteigen des Lastwinkels, erkannt wird. Des Weiteren betrifft die Erfindung eine Textilmaschine, insbesondere eine Offenend- oder Luftspinnmaschine, mit einer Vielzahl an zumindest teilweise einzelmotorisch angetriebenen Arbeitsstellen (1), wobei einer Arbeitsstelle (1) zumindest ein Schrittmotor (17) zugeordnet ist und wobei die Arbeitsstelle (1) eine Einrichtung zur Messung einer Lastgröße des Schrittmotors (17), insbesondere eines Lastwinkels, sowie eine Steuerung (18) umfasst, die den Schrittmotor (17) gemäß der vorangegangenen Beschreibung betreibt.

## Beschreibung

Die Erfindung betrifft ein Verfahren zum Betreiben einer Textilmaschine, insbesondere einer Offenend- oder Luftspinnmaschine, wobei die Textilmaschine eine Vielzahl an zumindest teilweise einzelmotorisch angetriebenen Arbeitsstellen umfasst, wobei einer Arbeitsstelle zumindest ein Schrittmotor zugeordnet ist. Des Weiteren betrifft die Erfindung eine Textilmaschine, insbesondere eine Offenend- oder Luftspinnmaschine, mit einer Vielzahl an zumindest teilweise einzelmotorisch angetriebenen Arbeitsstellen, wobei einer Arbeitsstelle zumindest ein Schrittmotor zugeordnet ist.

Aus der DE 10 2005 002 409 A1 ist ein Verfahren sowie eine Vorrichtung zum Bestimmen der Nullposition eines über einen Schrittmotor changierbaren Fadenführers einer Spulvorrichtung einer Kreuzspulen herstellenden Textilmaschine bekannt. Dabei wird der Fadenführer über den Schrittmotor zunächst in Richtung einer Nullstellung verfahren und mit geringer Geschwindigkeit an einem in Fahrtrichtung hinter der Nullstellung angeordneten, definierten Anschlag positioniert. Der Schrittmotor wird dann stromlos geschaltet, wodurch der Rotor des Schrittmotors in eine von zwei möglichen Raststellungen fällt. Anschließend wird der Schrittmotor durch eine definierte Bestromung seiner Statorwicklung so angesteuert, dass der Rotor des Schrittmotors bei einem erneuten Abschalten in der Raststellung steht, in der der Fadenführer in seiner Nullstellung positioniert ist. Dadurch, dass der Schrittmotor zweimal stromlos geschalten werden muss bis der Fadenführer in seiner Nullstellung positioniert ist, ist dieses Verfahren ziemlich aufwendig. Außerdem übt der Schrittmotor, wenn er stromlos geschalten ist, kein Drehmoment aus, was ebenfalls nachteilig sein kann.

Aufgabe der vorliegenden Erfindung ist es also, ein verbessertes Verfahren zur Steuerung eines Schrittmotors einer Textilmaschine sowie eine Textilmaschine mit einer derartigen Steuerung eines Schrittmotors vorzuschlagen.

Die Aufgabe wird gelöst mit den Merkmalen der unabhängigen Ansprüche.

Vorgeschlagen wird ein Verfahren zum Betreiben einer Textilmaschine, die eine Vielzahl an zumindest teilweise einzelmotorisch angetriebenen Arbeitsstellen umfasst. Die Arbeitsstellen können also zum Teil auch zentral angetrieben sein, müssen aber zumindest einen einzelmotorischen Antrieb aufweisen. Selbstverständlich ist das Verfahren auch auf Textilmaschinen anwendbar, bei denen die Arbeitsstellen komplett einzelmotorisch angetrieben werden. Einer Arbeitsstelle ist dabei zumindest ein Schrittmotor als einzelmotorischer Antrieb zugeordnet. Das Verfahren kann auf verschiedene Arten von Textilmaschinen, insbesondere aber auf Offenend- oder Luftspinnmaschinen, anwendbar sein. Die nicht abschließende Liste von Elementen, die von Schrittmotoren angetrieben werden können, umfasst: eine Garnübergabeeinrichtung, einen Spinnboxöffner, einen Garnreiniger, ein Multiventil, eine Changiereinrichtung, eine Fadenverlegeeinrichtung und/oder eine Saugdüse.

Erfindungsgemäß wird eine Lastgröße des Schrittmotors gemessen. Diese Lastgröße ist insbesondere ein Lastwinkel, kann aber auch eine davon abhängige Größe sein. Bei einem zweipoligen Schrittmotor ist der Lastwinkel definiert als der Winkel zwischen dem Rotor und dem von den Spulen erzeugten Magnetfeld. Bei einem n-poligen Schrittmotor ist der Lastwinkel das n/2 - fache des Winkels zwischen dem Rotor und dem von den Spulen erzeugten Magnetfeld. Eine Annäherung eines vom Schrittmotor angetriebenen Elements an eine Endlage wird dann durch eine Veränderung der Lastgröße, insbesondere ein Ansteigen des Lastwinkels, erkannt. Dabei ist mit Annäherung ein erster mechanischer Kontakt des vom Schrittmotor angetriebenen Elements mit einem der Endlage zugeordnetem Kontaktelement zu verstehen. Das Kontaktelement kann dabei beispielsweise ein speziell für eine Endlagenbestimmung eingerichteter Anschlag oder ein zu messendes Element wie die Oberfläche einer Spule sein. Durch einen Kontakt des vom Schrittmotor angetriebenen Elements mit dem Kontaktelement der Endlage erhöht sich die mechanische Last des Schrittmotors, so dass sich seine Lastgröße verändert, insbesondere der Lastwinkel ansteigt. Durch diese Veränderung der Lastgröße, bzw. dieses Ansteigen des Lastwinkels, kann also die Annäherung des vom Schrittmotor angetriebenen Elements an die Endlage erkannt werden. Dies erlaubt eine einfache aber sehr effiziente Steuerung des Schrittmotors.

Prinzipiell ist es möglich, zur Bestimmung der Lastgröße, insbesondere des Lastwinkels, einen Winkelsensor zu verwenden, der die exakte Position des Rotors bestimmt. Insbesondere bei Schrittmotoren mit einer hohen Anzahl an Polen würde hier aber ein sehr genauer und damit teurer Winkelsensor benötigt werden, um den Lastwinkel mit einer guten Auflösung zu bestimmen. Vorteilhafterweise wird die Lastgröße daher aus am Schrittmotor gemessenen Spannungen und/oder Stromstärken bestimmt, insbesondere über eine Phasenverschiebung einer Motorspannung gegenüber einem Spulenstrom. Spannungen und Stromstärken können beispielsweise mit günstigen und kleinen Halbleiterbauelementen gemessen werden. Bei vielen Schrittmotoren ist eine solche Messung von Spannungen und/oder Stromstärken sogar schon integriert. Den Winkel des erzeugten Magnetfeldes erhält man beispielsweise über den Spulenstrom. Den Winkel des Rotors kann man zum Beispiel über die Motorspannung erhalten. Ein Teil der Motorspannung kommt nämlich von der durch die Drehung des Rotors induzierten Spannung, also der Gegen-EMK (elektromotorische Kraft), und gibt somit Aufschluss über den Winkel des Rotors. Über die Phasenverschiebung zwischen der Motorspannung und dem Spulenstrom lässt sich also der Winkel zwischen dem Rotor und dem Magnetfeld, und damit der Lastwinkel, berechnen. Dies ist dabei ohne zusätzliche mechanische Elemente, also weitgehend verschleißfrei, möglich.

Von Vorteil ist es, wenn zur Bestimmung der Lastgröße Schaltsignale einer Chopper-Steuerung des Schrittmotors verwendet werden. Diese Schaltsignale sind bei der Chopper-Steuerung sowieso schon bekannt. Um die Lastgröße bzw. den Lastwinkel zu bestimmen ist also lediglich noch eine Auswertung der Schaltsignale der Chopper-Steuerung nötig.

Es ist vorteilhaft, wenn bei Erkennen einer Annäherung an eine Endlage eine Rotationsgeschwindigkeit des Schrittmotors reduziert und der Schrittmotor zu einem Stopp gebracht und/oder ein Phasenstrom erhöht wird, so dass der Lastwinkel 90° nicht überschreitet. Das Reduzieren der Rotationgeschwindigkeit des Schrittmotors dient zum einen dazu, dass das Aufeinandertreffen des vom Schrittmotor angetriebenen Elements mit dem der Endlage zugeordneten Kontaktelement etwas langsamer bzw. nicht so hart ausfällt. Zudem kann durch ein sukzessives Reduzieren der Rotationsgeschwindigkeit die Endlage genauer und präziser erreicht werden. Schließlich wird der Schrittmotor zu einem Stopp gebracht, wobei dies vorteilhafterweise geschieht bevor der Schrittmotor Schritte verloren hat. Ein Verlieren von Schritten würde beispielsweise das Zählen der Schritte bis zur Endlage beeinträchtigen. Durch ein Erhöhen des Phasenstroms, so dass der Lastwinkel 90° nicht überschreitet, kann dem Verlieren von Schritten zusätzlich entgegengewirkt werden. Da ein Verlieren von Schritten erst eintreten kann, wenn der Lastwinkel 90° überschreitet, ist hiermit ein Verlieren von Schritten von vornherein ausgeschlossen. Zudem bewirkt der höhere Phasenstrom ein höheres Drehmoment, so dass sich das vom Schrittmotor angetriebene Element noch weiter dem der Endlage zugeordneten Kontaktelement annähern kann.

Vorteilhafterweise werden die Schritte des Schrittmotors von einer Ausgangsposition, insbesondere bis zur Endlage, gezählt. Über die bekannte Anzahl der Schritte und die technischen Daten des Schrittmotors (Anzahl der Schritte pro Umdrehung) kann somit auf den Winkel zwischen der Ausgangsposition und der aktuellen Position bzw. der Endlage geschlossen werden. Ist zudem der Abstand von dem vom Schrittmotor angetriebenen Element zur Drehachse des Schrittmotors bekannt, kann die vom Element zurückgelegte Strecke berechnet werden.

In einer vorteilhaften Weiterbildung der Erfindung befindet sich die Ausgangsposition oder die Endlage an einer Oberfläche einer Spule. Die jeweils andere Lage, d.h. die Endlage bzw. die Ausgangsposition ist dabei üblicherweise durch einen festen Anschlag vorgegeben. Insbesondere wird durch das Zählen der Schritte des Schrittmotors der Durchmesser der Spule bestimmt. Da nun der zurückgelegte Winkel bzw. die zurückgelegte Strecke des vom Schrittmotor angetriebenen Elements bekannt ist, kann über einfache geometrische Beziehungen der Durchmesser der Spule berechnet werden. Das vom Schrittmotor angetriebene Element kann dabei speziell zur Bestimmung des Durchmessers der Spule ausgebildet sein. Es kann sich beim vom Schrittmotor angetriebenen Element aber auch beispielsweise um eine Saugdüse handeln, die zum Finden eines auf die Spule aufgelaufenen Fadenendes ebenfalls zunächst bis zur Oberfläche der Spule bewegt wird. Im letzteren Fall erfüllt die Saugdüse damit noch eine extra Aufgabe, nämlich das Bestimmen des Durchmessers der Spule.

Von Vorteil ist es, wenn die Ausgangsposition über eine Annäherung an eine Ausgangslage durch eine Veränderung der Lastgröße, insbesondere ein Ansteigen des Lastwinkels, bestimmt wird. Dies erfolgt analog zur oben beschriebenen Annäherung an die Endlage, mit den dort genannten Vorteilen.

Es ist auch vorteilhaft, wenn eine ungefähre Endlage bestimmt wird oder vorgegeben ist und die Rotationsgeschwindigkeit vor Erreichen der ungefähren Endlage verringert wird. Eine vorgegebene Endlage ist dabei beispielsweise ein fester, unveränderlicher Anschlag. Eine ungefähre Endlage, die zunächst bestimmt werden muss, ist zum Beispiel dann gegeben, wenn sich die Endlage auf der Oberfläche einer Spule befindet. Der genaue Durchmesser der Spule ist, bis er gemessen wird, oft nicht bekannt. Aus dem zuletzt gemessenen Durchmesser der Spule und der seither erfolgten Fadenproduktion kann aber ein ungefährer Wert für den aktuellen Durchmesser der Spule bestimmt werden. Wird nun die Rotationsgeschwindigkeit vor Erreichen dieser ungefähren Endlage verringert, so erfolgt das Aufeinandertreffen des vom Schrittmotor angetriebenen Elements mit dem der Endlage zugeordneten Kontaktelement langsamer und damit zum einen nicht so hart und zum anderen präziser.

Vorteilhafterweise wird der Schrittmotor nach Erreichen der Endlage eine bestimmte Anzahl an Schritten zurückgefahren. Bei Erreichen der Endlage drückt das vom Schrittmotor angetriebene Element mit einer bestimmten Kraft auf das der Endlage zugeordnete Kontaktelement. Oft wird aber dieser Druck nicht benötigt oder ist überhaupt nicht erwünscht. Nicht benötigt wird der Druck beispielsweise dann, wenn das Verfahren des Schrittmotors lediglich dem Bestimmen der Endlage gedient hat. Dann ist mit Erreichen der Endlage die Aufgabe erfüllt. Ein Zurückfahren des Schrittmotors um eine bestimmte Anzahl an Schritten führt zu einem daraufhin geringeren Stromverbrauch des Schrittmotors, da keine anpressende Kraft mehr erzeugt werden muss. Außerdem schont dies das vom Schrittmotor angetriebene Element und das der Endlage zugeordnete Kontaktelement, da diese nicht mehr aufeinandergedrückt werden. Auch in anderen Fällen kann das Zurückfahren des Schrittmotors von Vorteil sein, beispielsweise, wenn es sich beim vom Schrittmotor angetriebenen Element um eine Saugdüse zum Finden eines auf eine Spule aufgelaufenen Fadenendes handelt. In diesem Fall ist es in der Regel auch nicht erwünscht, dass die Saugdüse mit Kraft auf die Spulenoberfläche gedrückt wird, unter anderem, damit nicht die obersten Fadenlagen beschädigt werden. Vielmehr sollte die Saugdüse in geringer Entfernung über der Spulenoberfläche platziert werden. Dies wird aber genau dadurch erreicht, dass der Schrittmotor die Saugdüse eine bestimmte Anzahl an Schritten zurückfährt.

Von Vorteil ist es, wenn dann, wenn die Endlage von der ungefähren Endlage um mehr als eine vorbestimmte Anzahl an Schritten abweicht, ein Fehler gemeldet wird. Die vorbestimmte Anzahl an Schritten kann dabei je nach dem vom Schrittmotor angetriebenen Element und der Beschaffenheit von Ausgangslage und Endlage unterschiedlich sein, sollte aber gewissen Toleranzen und Unsicherheiten Rechnung tragen. Sollte die Endlage von der ungefähren Endlage dann um mehr als diese vorbestimmte Anzahl an Schritten abweichen, so muss davon ausgegangen werden, dass ein Fehler aufgetreten ist. Dies kann beispielsweise ein Fehler bei der Steuerung des Schrittmotors sein oder ein Fremdgegenstand, der den Weg des vom Schrittmotor angetriebenen Elements blockiert. In jedem Fall ist es für den weiteren ordnungsgemäßen Betrieb der Arbeitsstelle der Textilmaschine sinnvoll, wenn dieser Fehler gemeldet wird, beispielsweise an eine Steuereinheit, an einen Serviceroboter und/oder an eine Bedienperson.

Des Weiteren wird eine Textilmaschine, insbesondere eine Offenend- oder Luftspinnmaschine, mit einer Vielzahl an zumindest teilweise einzelmotorisch angetriebenen Arbeitsstellen vorgeschlagen. Selbstverständlich können die Arbeitsstellen auch komplett einzelmotorisch angetrieben werden. Dabei ist einer Arbeitsstelle zumindest ein Schrittmotor zugeordnet.

Erfindungsgemäß umfasst die Arbeitsstelle eine Einrichtung zur Messung einer Lastgröße des Schrittmotors, insbesondere eines Lastwinkels, sowie eine Steuerung, die den Schrittmotor gemäß der obigen Beschreibung betreibt. Es wird also die Lastgröße des Schrittmotors gemessen und eine Annäherung des vom Schrittmotor angetriebenen Elements an eine Endlage durch eine Veränderung der Lastgröße, insbesondere ein Ansteigen des Lastwinkels, erkannt. Die Steuerung des Schrittmotors ist damit einfach aber auch sehr effizient.

Die Einrichtung zur Messung der Lastgröße des Schrittmotors kann dabei einen Winkelsensor umfassen, der die exakte Position des Rotors des Schrittmotors bestimmt. Dies führt allerdings zu einer sehr aufwendigen Messung der Lastgröße des Schrittmotors. Vorteilhaft ist es daher, wenn die Einrichtung zur Messung der Lastgröße ein Strommessgerät und/oder ein Spannungsmessgerät umfasst, die bevorzugt einer Elektronik des Schrittmotors zugeordnet sind. Wie schon oben beschrieben lässt sich mit Hilfe von Strom- und Spannungsmessungen der Winkel zwischen dem Rotor und dem Magnetfeld, und damit der Lastwinkel, berechnen. Strommessgeräte bzw. Spannungsmessgeräte sind als Halbleiterbauelemente sehr klein und günstig ausführbar. Bei einer Vielzahl an handelsüblichen Schrittmotoren sind sie sogar schon in den Schrittmotor integriert. Der bauliche und technische Aufwand für die Strommessgeräte bzw. Spannungsmessgeräte ist also sehr gering.

Vorteilhafterweise sind die Einrichtung zur Messung der Lastgröße, die Steuerung und/oder eine Chopper-Steuerung des Schrittmotors miteinander verbunden und/oder sie bilden eine Einheit. Die gemessene Lastgröße bzw. der gemessene Lastwinkel können, insbesondere wenn sich die Lastgröße bzw. der Lastwinkel verändern, eine Eingabe für die Steuerung des Schrittmotors sein. Sofern der Schrittmotor per Chopper-Steuerung gesteuert wird, wirkt die Steuerung des Schrittmotors direkt auf die Chopper-Steuerung. Die Daten der Chopper-Steuerung können ihrerseits aber wieder für die Messung der Lastgröße verwendet werden. Logisch gesehen gehören also die Einrichtung zur Messung der Lastgröße, die Steuerung und die Chopper-Steuerung zusammen. Insoweit ist es vorteilhaft, wenn sie miteinander verbunden sind, damit der Austausch von Daten und/oder Steuerbefehlen funktioniert. Vom Platzbedarf her ist dabei vorteilhaft, wenn zwei oder alle drei der genannten Elemente eine Einheit bilden. Es entfallen damit separate Gehäuse für die einzelnen Elemente und auch Verbindungsstecker, da dann innerhalb der Einheit feste Verbindungen eingerichtet werden können.

Von Vorteil ist es, wenn die Steuerung zur Festlegung eines Phasenstroms des Schrittmotors, zur Festlegung einer Rotationsgeschwindigkeit des Schrittmotors und/oder zum Zählen von Schritten des Schrittmotors ausgebildet ist. Über den Phasenstrom wird das Drehmoment des Schrittmotors beeinflusst. Wird dann beispielsweise eine Annäherung an eine Endlage erkannt, kann durch Erhöhen des Phasenstroms das Drehmoment erhöht werden, was auch einem Schrittverlust des Schrittmotors vorbeugt. Wenn die Rotationsgeschwindigkeit festlegbar ist, dann kann, wenn eine Annäherung an eine Endlage erkannt wird, die Rotationsgeschwindigkeit verringert werden, so dass das Aufeinandertreffen eines vom Schrittmotor angetriebenen Elements mit einem der Endlage zugeordneten Kontaktelement etwas langsamer bzw. nicht so hart ausfällt. Werden die Schritte des Schrittmotors gezählt, dann kann man aus der Schrittzahl zwischen einer Ausgangsposition und der aktuellen Position bzw. der Endlage des vom Schrittmotor angetriebenen Elements den vom angetriebenen Element zurückgelegten Winkel bzw. die vom angetriebenen Element zurückgelegte Strecke bestimmen. Der zurückgelegte Winkel zwischen Ausgangsposition und Endlage kann dabei beispielsweise zur Messung einer variablen Endlage, wie es zum Beispiel bei der Oberfläche einer Spule der Fall ist, verwendet werden. Der zurückgelegte Winkel zwischen der Ausgangsposition und der aktuellen Position kann auch zum Steuern des Schrittmotors verwendet werden, beispielsweise wenn dieser an einer bestimmten Position anhalten und/oder umkehren muss.

Vorteilhafterweise ist der Schrittmotor zum Antreiben einer Garnübergabeeinrichtung, eines Spinnboxöffners, eines Garnreinigers, eines Multiventils, einer Changiereinrichtung, einer Fadenverlegeeinrichtung und/oder einer Saugdüse ausgebildet. Beim Garnreiniger handelt es sich dabei um einen Sensor, der die Garnqualität kontrolliert und im Falle einer Changierbewegung des Garns mit dem Garn mitbewegt werden muss. Als Multiventil wird ein Garnspeicher, beispielsweise ein Siebspeicher, bezeichnet, der während des Fadensuchens das Garn aufnehmen soll. Bei allen genannten Einrichtungen ist es vorteilhaft, wenn eine Annäherung des vom Schrittmotor angetriebenen Elements an eine Endlage erkannt wird. Auch bei anderen Einrichtungen kann es aber möglich und sinnvoll sein, zum Antrieb der Einrichtung einen erfindungsgemäßen Schrittmotor zu verwenden, die obige Liste ist also nicht abschließend.

Weitere Vorteile der Erfindung sind in den nachfolgenden Ausführungsbeispielen beschrieben. Es zeigt:
- **Figur 1**: eine schematische Seitenansicht einer Arbeitsstelle,
- **Figur 2a**: eine schematische Seitenansicht einer Saugdüse und
- **Figur 2b**: eine schematische Vorderansicht einer Changiereinrichtung.

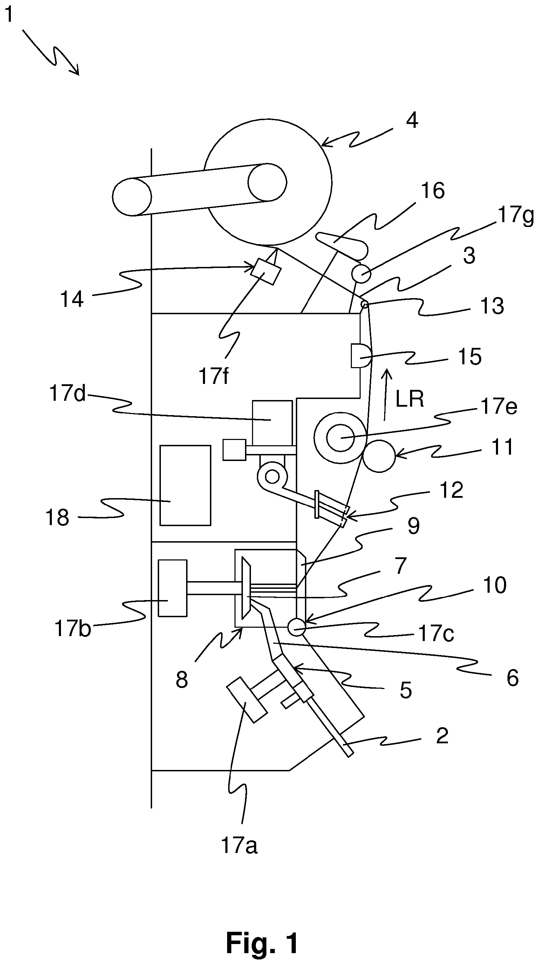

Figur 1 zeigt eine schematische Seitenansicht einer Arbeitsstelle 1 einer Textilmaschine. Die Textilmaschine kann eine Vielzahl an Arbeitsstellen 1 umfassen, um eine Produktivität der Textilmaschine entsprechend der Anzahl der Arbeitsstellen 1 zu erhöhen. Die Arbeitsstelle 1 ist im vorliegenden Ausführungsbeispiel als eine Spinnstelle einer Rotorspinnmaschine ausgebildet. Die Erfindung ist aber prinzipiell auf jede beliebige Textilmaschine anwendbar, insbesondere auf andere Offenend-Spinnmaschinen, Luftspinnmaschinen oder beispielsweise Spulmaschinen.

Die Arbeitsstelle 1 stellt aus einem Faserband 2 einen Faden 3 her. Der Faden 3 durchläuft in einer Lieferrichtung LR die Arbeitsstelle 1 und wird schließlich auf eine Spule 4 aufgewickelt.

Zunächst wird das Faserband 2 aber in einer Auflöseeinheit 5 in seine einzelnen Fasern 6 aufgelöst. Die einzelnen Fasern 6 werden zu einem Spinnrotor 7 geführt, der aus den einzelnen Fasern 6 den Faden 3 herstellt. Der Spinnrotor 7 ist im vorliegenden Ausführungsbeispiel in einer Spinnbox 8 angeordnet, die von einem Spinnboxdeckel 9 verschlossen ist. Der Spinnboxdeckel 9 kann dabei von einem Spinnboxöffner 10 geöffnet werden, so dass Zugriff auf die Spinnbox 8 entsteht. Der durch den Spinnrotor 7 gebildete Faden 3 wird mit Hilfe eines Abzugswalzenpaares 11 vom Spinnrotor 7 aus der Spinnbox 8 abgezogen, wobei der Faden 3 noch eine erste Changiereinrichtung 12 passieren kann, die den Faden 3 changiert. In Lieferrichtung LR dem Abzugswalzenpaar 11 nachgeordnet, weist die Arbeitsstelle 1 eine Umlenkeinheit 13 auf, die den Faden 3 zu einer zweiten Changiereinheit 14 umlenkt. Diese zweite Changiereinheit 14 changiert den Faden 3 seitlich zur Lieferrichtung LR so, dass er in der gewünschten Weise, insbesondere in Kreuzwicklung, auf der Spule 4 aufgewickelt wird.

Zwischen dem Abzugswalzenpaar 11 und der Umlenkeinheit 13 ist im vorliegenden Ausführungsbeispiel ein Fadenwächter 15 angeordnet, mit dessen Hilfe eine Anwesenheit des Fadens 3 überwacht werden kann. Außerdem ist eine linear verschiebbare Saugdüse 16 vorgesehen, die ein auf die Spule 4 aufgelaufenes Fadenende - beispielsweise nach einem Fadenbruch - finden und ansaugen kann. Die Saugdüse 16 kann anstatt linear verschiebbar zu sein beispielsweise auch schwenkbar oder drehbar ausgebildet sein.

Des Weiteren weist die Arbeitsstelle 1 eine Vielzahl an einzelmotorischen Antrieben in Form von Schrittmotoren 17a - 17g auf. Die einzelnen Schrittmotoren 17a - 17g werden hier exemplarisch gezeigt. Es ist auch möglich, dass statt einiger dieser Schrittmotoren 17a - 17g zentrale Antriebe vorgesehen sind. Für die Erfindung ist es wesentlich, dass zumindest ein Antrieb als Schrittmotor 17a - 17g ausgebildet ist. Darüber hinaus kann die Arbeitsstelle 1 auch noch weitere Schrittmotoren aufweisen, beispielsweise zum Antreiben von hier nicht gezeigten Einrichtungen wie einer Garnübergabeeinrichtung, einem Garnreiniger, eines Multiventils und/oder einer Fadenverlegeeinrichtung. Die Schrittmotoren 17a - 17g des vorliegenden Ausführungsbeispiels sind der Auflöseeinheit 5 (Schrittmotor 17a), dem Spinnrotor 7 (17b), dem Spinnboxöffner 10 (17c), der ersten Changiereinrichtung 12 (17d), dem Abzugswalzenpaar 11 (17e), der zweiten Changiereinrichtung 14 (17f) bzw. der Saugdüse 16 (17g) zugeordnet. Die genannten Einrichtungen können somit einzeln, unabhängig voneinander und unabhängig von den entsprechenden Einrichtungen anderer Arbeitsstellen 1 mit Hilfe der zugeordneten Schrittmotoren 17a - 17g angetrieben werden.

Außerdem weist die Arbeitsstelle 1 eine Steuerung 18 auf, die mittels einer hier nicht gezeigten Verbindung mit zumindest einem der Schrittmotoren 17a - 17g verbunden ist, um diesen zu steuern und um dadurch den Herstellungsprozess des Fadens 3 auszuführen.

Erfindungsgemäß wird eine Lastgröße von zumindest einem der Schrittmotoren 17a - 17g gemessen. Insbesondere handelt es sich bei der Lastgröße um einen Lastwinkel. Nähert sich nun das vom Schrittmotor 17a - 17g angetriebene Element an eine Endlage an, so wird eine Veränderung der Lastgröße, insbesondere ein Ansteigen des Lastwinkels, erkannt. Zwei mögliche Verfahren zur Steuerung von Schrittmotoren 17a - 17g werden in den folgenden Figuren detaillierter erläutert.

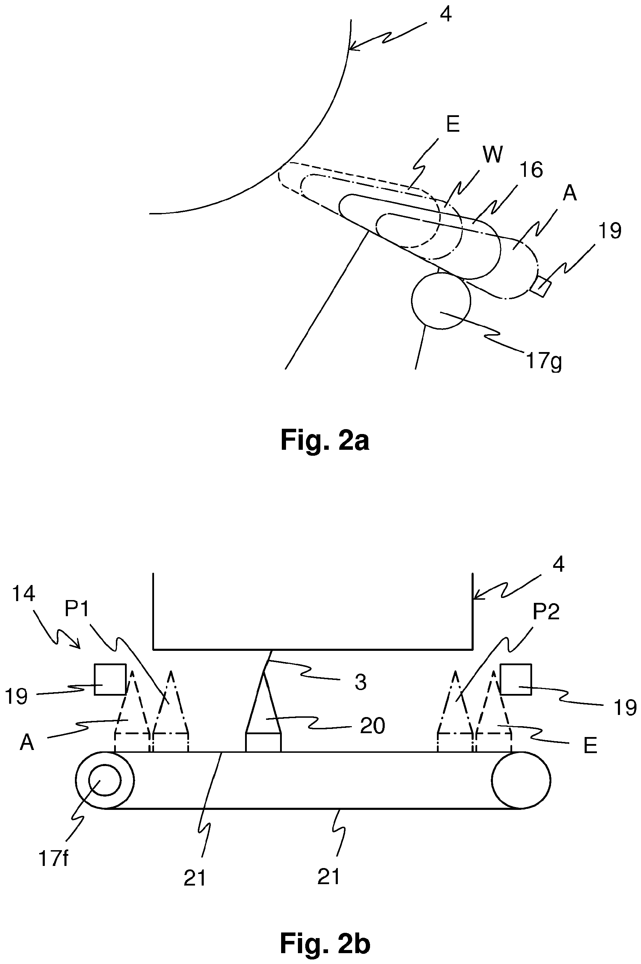

Figur 2a zeigt eine schematische Seitenansicht einer Saugdüse 16. Mit Hilfe der Saugdüse 16 kann ein auf eine Spule 4 aufgelaufenes Fadenende angesaugt und damit gefunden und weiterbehandelt werden. Die Saugdüse 16 ist dabei linear verschiebbar und wird, beispielsweise über ein Ritzel und eine Zahnstange (die der Übersichtlichkeit halber nicht gezeigt werden), von einem Schrittmotor 17g angetrieben.

Im normalen Spinn- bzw. Spulbetrieb wird die Saugdüse 16 nicht benötigt und befindet sich in einer Ausgangsposition A, die über einen Anschlag 19 definiert ist. Ist nun ein Fadenende, beispielsweise nach einem Fadenbruch, auf die Spule 4 aufgelaufen, verschiebt der Schrittmotor 17g die Mündung der Saugdüse 16 in Richtung der Oberfläche der Spule 4. Wenn die Mündung der Saugdüse 16 die Oberfläche der Spule berührt, hat sie ihre Endlage E erreicht. Dazu verschiebt der Schrittmotor 17g die Saugdüse 16 zunächst mit einer hohen Geschwindigkeit. Je näher die Mündung der Saugdüse 16 an die Oberfläche der Spule 4 kommt, desto langsamer bewegt der Schrittmotor 17g die Saugdüse 16. Wie nahe die Mündung der Saugdüse 16 an der Oberfläche der Spule 4 ist, wird dabei ungefähr berechnet - die genaue Position der Endlage E erhält man erst, wenn die Saugdüse 16 in Kontakt mit der Oberfläche der Spule 4 ist. Zur ungefähren Berechnung verwendet man die bekannte Geometrie der Saugdüse 16 und der Ausgangsposition A in Bezug auf die Spule 4. Den Spulendurchmesser kann man ungefähr aus der bekannten Menge an produziertem Faden, der sich auf der Spule befindet, bestimmen. Werden nun die Schritte des Schrittmotors 17g gezählt, die die Saugdüse 16 von der Ausgangsposition A zurückgelegt hat, so kann man den ungefähren Abstand der Mündung der Saugdüse 16 von der Oberfläche der Spule 4 berechnen.

In der Nähe der Oberfläche der Spule 4 wird die Saugdüse 16 also langsam auf die Spule 4 zu bewegt. Kommt nun die Mündung der Saugdüse 16 in Kontakt mit der Oberfläche der Spule 4, so verändert sich eine Lastgröße des Schrittmotors 17g, insbesondere steigt ein Lastwinkel des Schrittmotors 17g an. Wird ein solches Ansteigen des Lastwinkels erkannt, so reduziert der Schrittmotor 17g die Geschwindigkeit der Saugdüse 16 weiter. Gleichzeitig wird ein Phasenstrom des Schrittmotors 17g erhöht, so dass der Schrittmotor 17g keine Schritte verliert.

Bei einem weiteren Ansteigen des Lastwinkels wird der Schrittmotor 17g vollständig gestoppt. Die Mündung der Saugdüse 16 hat nun ihre Endlage E erreicht. Über die von der Ausgangsposition A zur Endlage E gezählten Schritte des Schrittmotors 17g lässt sich nun die genaue Lage der Saugdüse 16 bestimmen und daraus der Durchmesser der Spule 4 berechnen. Der nun bekannte Durchmesser der Spule 4 kann als Grundlage der nächsten Schätzung des Durchmessers der Spule 4 dienen.

Zum Suchen des auf die Oberfläche der Spule 4 aufgelaufenen Fadenendes muss sich die Mündung der Saugdüse 16 knapp über der Oberfläche der Spule 4 befinden. Ist die Saugdüse 16 in ihrer Endlage E, so drückt die Saugdüse 16 auf die Oberfläche der Spule 4 und beim Drehen der Spule 4, das für ein Finden des Fadenendes notwendig ist, würden die oberen Fadenlagen auf der Spule 4 beschädigt werden. Daher wird die Saugdüse 16 wieder ein paar Schritte des Schrittmotors 17g in eine Arbeitsposition W zurück gefahren. Die Anzahl der Schritte, die die Saugdüse 16 zurück gefahren wird, ist dabei vorbestimmt.

Hat die Saugdüse 16 dann das Fadenende gefunden und beispielsweise an einen Fadenfänger übergeben, fährt der Schrittmotor 17g die Saugdüse 16 wieder in ihre Ausgangsposition A. Dazu werden wie oben beim Annähern an die Endlage E die Geschwindigkeit des Schrittmotors 17g reduziert und der Phasenstrom erhöht.

Auch beim Zurückfahren zur Ausgangsposition A werden die Schritte des Schrittmotors 17g gezählt. Die nun wieder erreichte Ausgangsposition A sollte mit der vorherigen Lage der Ausgangsposition A innerhalb einer sehr geringen Toleranz übereinstimmen. Ist dies nicht der Fall, so wird ein Fehler an die Steuerung 8 gemeldet. Ein mögliche Ursache für einen solchen Fehler könnte ein Verschmutzung der beweglichen Teile der Saugdüse 16 sein, die die Saugdüse 16 blockiert und nicht in ihre Ausgangsposition A zurück kehren lässt.

Figur 2b zeigt eine Vorderansicht einer Changiereinrichtung 14. Die Changiereinrichtung 14 bewegt dabei den Faden 3 hin und her und verlegt ihn somit auf der Spule 4, beispielsweise in einer Kreuzwicklung. Ein Changierführer 20 der Changiereinrichtung 14 ist dabei an einem Antriebsband 21 angebracht, das von einem Schrittmotor 17f angetrieben wird. Um den Faden 3 richtig auf der Spule 4 zu verlegen, wird der Changierführer 20 von einer ersten Position P1 zu einer zweiten Position P2 und wieder zurück bewegt. Die Positionen P1 und P2 werden dabei durch Zählen der Schritte des Schrittmotors 17f bestimmt.

Da es nicht auszuschließen ist, dass sich die Lage der Positionen P1 und P2 nach einiger Zeit minimal verändert - sei es durch verlorene Schritte des Schrittmotors 17f, durch ein Ausdehnen oder Schrumpfen des Antriebsbands 21 auf Grund von Temperaturänderungen oder aus anderen Gründen - werden die Positionen P1 und P2 regelmäßig justiert, beispielsweise, wenn die Spule 4 getauscht wird, oder bei einem Fadenbruch. Zum Justieren der Positionen P1 und P2 sind eine Ausgangsposition A sowie eine Endlage E vorgegeben, die durch Anschläge 19 definiert sind. Zunächst fährt der Schrittmotor 17f den Changierführer 20 zur Ausgangsposition A. Dabei wird schon vor dem - berechneten - Erreichen der Ausgangsposition A die Geschwindigkeit des Schrittmotors 17f verringert. Kommt nun der Changierführer 20 in Kontakt mit dem Anschlag 19, so wird diese Annäherung über eine Änderung einer Lastgröße des Schrittmotors 17f, insbesondere einen Anstieg des Lastwinkels, erkannt. Die Geschwindigkeit des Schrittmotors 17f wird darauf hin weiter verringert und der Schrittmotor 17f sodann zu einem Stopp gebracht. Gleichzeitig wird der Phasenstrom des Schrittmotors 17f erhöht, um den Lastwinkel unter 90° zu halten und keine Schritte zu verlieren. Nun wird der Changierführer 20 zur Endlage E gefahren, wobei das Erreichen der Endlage E wie soeben für die Ausgangsposition A beschrieben erfolgt. Zwischen der Ausgangsposition A und der Endlage E werden die Schritte des Schrittmotors 17f gezählt. Die Positionen P1 und P2 sind in Bezug auf die Ausgangsposition A und die Endlage E festgelegt, beispielsweise bei 10% bzw. 90% der Strecke zwischen der Ausgangsposition A und der Endlage E. Diese Werte werden mit der gezählten Schrittzahl multipliziert, so dass die Positionen P1 und P2 wieder durch Zählen der Schritte erreicht werden können.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Arbeitsstelle
- 2: Faserband
- 3: Faden
- 4: Spule
- 5: Auflöseeinheit
- 6: Fasern
- 7: Spinnrotor
- 8: Spinnbox
- 9: Spinnboxdeckel
- 10: Spinnboxöffner
- 11: Abzugswalzenpaar
- 12: Erste Changiereinrichtung
- 13: Umlenkeinheit
- 14: Zweite Changiereinrichtung
- 15: Fadenwächter
- 16: Saugdüse
- 17: Schrittmotor
- 18: Steuerung
- 19: Anschlag
- 20: Changierführer
- 21: Antriebsband

- A: Ausgangsposition
- E: Endlage
- LR: Lieferrichtung
- P1: erste Position
- P2: zweite Position
- W: Arbeitsposition

## Patentansprüche

1. Verfahren zum Betreiben einer Textilmaschine, insbesondere einer Offenend- oder Luftspinnmaschine, wobei die Textilmaschine eine Vielzahl an zumindest teilweise einzelmotorisch angetriebenen Arbeitsstellen (1) umfasst, wobei einer Arbeitsstelle (1) zumindest ein Schrittmotor (17) zugeordnet ist,
**dadurch gekennzeichnet, dass**
eine Lastgröße des Schrittmotors (17), insbesondere ein Lastwinkel, gemessen wird und eine Annäherung eines vom Schrittmotor (17) angetriebenen Elements (5; 7; 9; 11; 12; 14; 16) an eine Endlage (E) durch eine Veränderung der Lastgröße, insbesondere ein Ansteigen des Lastwinkels, erkannt wird.

2. Verfahren nach dem vorherigen Anspruch, **dadurch gekennzeichnet, dass** die Lastgröße aus am Schrittmotor (17) gemessenen Spannungen und/oder Stromstärken bestimmt wird, insbesondere über eine Phasenverschiebung einer Motorspannung gegenüber einem Spulenstrom.

3. Verfahren nach einem der vorherigen Ansprüche, **dadurch gekennzeichnet, dass** zur Bestimmung der Lastgröße Schaltsignale einer Chopper-Steuerung des Schrittmotors (17) verwendet werden.

4. Verfahren nach einem der vorherigen Ansprüche, **dadurch gekennzeichnet, dass** bei Erkennen einer Annäherung an eine Endlage (E) eine Rotationsgeschwindigkeit des Schrittmotors (17) reduziert und der Schrittmotor (17) zu einem Stopp gebracht und/oder ein Phasenstrom erhöht wird, so dass der Lastwinkel 90° nicht überschreitet.

5. Verfahren nach einem der vorherigen Ansprüche, **dadurch gekennzeichnet, dass** die Schritte des Schrittmotors (17) von einer Ausgangsposition (A), insbesondere bis zur Endlage (E), gezählt werden.

6. Verfahren nach einem der vorherigen Ansprüche, **dadurch gekennzeichnet, dass** sich die Ausgangsposition (A) oder die Endlage (E) an einer Oberfläche einer Spule (4) befindet und insbesondere durch das Zählen der Schritte des Schrittmotors (17) der Durchmesser der Spule (4) bestimmt wird.

7. Verfahren nach einem der vorherigen Ansprüche, **dadurch gekennzeichnet, dass** die Ausgangsposition (A) über eine Annäherung an eine Ausgangslage durch eine Veränderung der Lastgröße, insbesondere ein Ansteigen des Lastwinkels, bestimmt wird.

8. Verfahren nach einem der vorherigen Ansprüche, **dadurch gekennzeichnet, dass** eine ungefähre Endlage (E) bestimmt wird oder vorgegeben ist und die Rotationsgeschwindigkeit vor Erreichen der ungefähren Endlage (E) verringert wird.

9. Verfahren nach einem der vorherigen Ansprüche, **dadurch gekennzeichnet, dass** der Schrittmotor (17) nach Erreichen der Endlage (E) eine bestimmte Anzahl an Schritten zurückgefahren wird.

10. Verfahren nach einem der vorherigen Ansprüche, **dadurch gekennzeichnet, dass**, wenn die Endlage (E) von der ungefähren Endlage (E) um mehr als eine vorbestimmte Anzahl an Schritten abweicht, ein Fehler gemeldet wird.

11. Textilmaschine, insbesondere Offenend- oder Luftspinnmaschine, mit einer Vielzahl an zumindest teilweise einzelmotorisch angetriebenen Arbeitsstellen (1), wobei einer Arbeitsstelle (1) zumindest ein Schrittmotor (17) zugeordnet ist,
**dadurch gekennzeichnet, dass**
die Arbeitsstelle (1) eine Einrichtung zur Messung einer Lastgröße des Schrittmotors (17), insbesondere eines Lastwinkels, sowie eine Steuerung (18) umfasst, die den Schrittmotor (17) gemäß einem oder mehreren der vorherigen Ansprüche betreibt.

12. Textilmaschine nach dem vorherigen Anspruch, **dadurch gekennzeichnet, dass** die Einrichtung zur Messung der Lastgröße ein Strommessgerät und/oder ein Spannungsmessgerät umfasst, die bevorzugt einer Elektronik des Schrittmotors (17) zugeordnet sind.

13. Textilmaschine nach einem der vorherigen Ansprüche, **dadurch gekennzeichnet, dass** die Einrichtung zur Messung der Lastgröße, die Steuerung (18) und/oder eine Chopper-Steuerung des Schrittmotors (17) miteinander verbunden sind und/oder eine Einheit bilden.

14. Textilmaschine nach einem der vorherigen Ansprüche, **dadurch gekennzeichnet, dass** die Steuerung (18) zur Festlegung eines Phasenstroms des Schrittmotors (17), zur Festlegung einer Rotationsgeschwindigkeit des Schrittmotors (17) und/oder zum Zählen von Schritten des Schrittmotors (17) ausgebildet ist.

15. Textilmaschine nach einem der vorherigen Ansprüche, **dadurch gekennzeichnet, dass** der Schrittmotor (17) zum Antreiben einer Garnübergabeeinrichtung, eines Spinnboxöffners (10), eines Garnreinigers, eines Multiventils, einer Changiereinrichtung (12; 14), einer Fadenverlegeeinrichtung und/oder einer Saugdüse (16) ausgebildet ist.
